# EUROPÄISCHE PATENTSCHRIFT

(11) **EP 0 845 513 B1**
(45) Veröffentlichungstag und Bekanntmachung des Hinweises auf die Patenterteilung: **13.02.2002**
(21) Anmeldenummer: 97119842.9
(22) Anmeldetag: 13.11.1997
(51) Int. Cl.: C09J 7/02

(54) **Klebeband**
Adhesive tape
Ruban adhésif

(30) Priorität: 30.11.1996 DE 19649729
(43) Veröffentlichungstag der Anmeldung: 03.06.1998
(73) Patentinhaber: Tesa AG, 20253 Hamburg (DE)
(72) Erfinder: Lühmann, Bernd, Dr., 22846 Norderstedt (DE); Junghans, Andreas, 22457 Hamburg (DE)

(56) Entgegenhaltungen:
- EP-A- 0 735 121
- WO-A-95/06691
- DE-C- 4 222 849

## Beschreibung

Die Erfindung betrifft ein Klebeband für eine durch Zug rückstandsfrei und beschädigungslos wiederlösbare Verklebung, sowie seine Verwendung.

Hochdehnbare elastische Klebfolien für wiederlösbare Verklebungen, die durch Ziehen im wesentlichen in Richtung der Verklebungsebene wiederlösbar sind, sind bekannt und im Handel unter der Bezeichnung "tesa Power-Strips" erhältlich. Damit hergestellte Verklebungen bieten kraftvollen Halt und lassen sich doch spurlos wiederablösen ohne Beschädigung des Untergrundes oder der Fügeteile, wie dies in **DE 33 31 016 C2** beschrieben ist. **DE 4.222.849, DE 4.233.872, DE 4.428.587, DE 4.431.914** und **DE 195 11 288** beschreiben u.a. spezielle Ausführungen und Applikationen vorgenannter Klebfolien.

Mehrschichtige Klebfolien, welche hoch dehnbare wenig elastische oder auch hochdehnbare elastische Folienträger enthalten sowie Anwendungen selbiger Klebstoff-Folien sind ebenfalls bekannt, so aus **US 4,024,312** "Pressure-Sensitive Adhesive Tape for medical use - having an extensible, elastic block copolymer backing", **WO 92/11332** "Removable Adhesive Tape" (PSA tape using highly extensible backing with photopolymerized acrylic PSA), **WO 92/11333** "Removable Adhesive Tape" (PSA tape using highly extensible essentially inelastic backing), **WO 93/01979** "Sichern von Stapeln mit Stretch-Klebeband", und **WO 94/21157** "Article Support using stretch releasing adhesive".

So beschreibt **WO 92/11333** ein durch Ziehen in der Verklebungsebene wiederablösbares Klebeband, welches als Träger eine hochverstreckbare, im wesentlichen nicht rückstellende (nicht kautschukelastische) Folie nutzt, die nach Verstreckung < ca. 50% Rückstellvermögen aufweist. **US 4,024,312** beschreibt entsprechend entklebende Selbstklebebänder von im wesentlichen kautschukelastischer Natur.

In der Praxis zeigt sich, daß mit den zuvor genannten Selbstklebebändern auf glatten und festen Untergründen im Allgemeinen hohe Verklebungsfestigkeiten erreicht werden können. Auf rauhen Untergründen ist die Verklebungsfestigkeit insbesondere für Produkte von geringer Dicke, jedoch auch für Selbstklebebänder höherer Schichtstärke, für zahlreiche Anwendungen ungenügend. Ursache für die unzureichende Verklebungsfestigkeit ist wahrscheinlich vornehmlich eine nicht ausreichende Verklebungsfläche, bedingt durch eine zu niedrige Konformibilität der Klebebänder an rauhe und unregelmäßige Oberflächen, insbesondere wenn zwei rauhe Untergründe miteinander verklebt werden sollen. Z. B. werden bei Verklebungen planarer Materialien mittels tesa Power-Strips auf gestrichener Rauhfasertapete bei praxisgerechten Anpreßdrucken (100 N/7,4 cm²) oft nur Verklebungsflächen von ca 10% bis 40% der haftklebrigen Fläche erreicht. Aber auch bei der Verklebung auf glatte planare Oberflächen kann eine unzureichende Verklebungsfläche Begründung für eine mangehafte Verklebungsfestigkeit sein. Ursache ist wohl der Einschluß von Luftblasen in den Verklebungsflächen. Entsprechende Luftblasen sind oft auch durch hohe Anpreßdrucke nicht vollständig zu eliminieren. In ungünstigen Fällen können Verklebungen, die entsprechende Lufteinschlüsse aufweisen, im Vergleich zu vollflächig und luftblasenfrei verklebten Mustern drastisch reduzierte Verklebungsfestigkeiten bedingen.

**US 5,516,581** und **WO 95/06691** beschreiben durch Dehnen im wesentlichen in der Verklebungsebene wiederablösbare Selbstklebebänder, deren Träger polymere Schäume enthalten. Insbesondere beschreibt **WO 95/06691,** daß durch Einsatz von Polymerschäume enthaltende Trägermaterialien, durch Verstrecken wiederablösbare Selbstklebebänder erhältlich sind, die eine deutlich verbesserte Anschmiegsamkeit an rauhen und ungleichmäßigen Oberflächen aufweisen. Infolge der hierdurch erreichten höheren Verklebungsfläche lassen sich mit diesen Produkten auch auf rauhen und unregelmäßig geformten Untergründen hohe Verklebungsfestigkeiten realisieren.

Die in **US 5,516,581** und **WO 95/06691** beschriebenen Schaumstoffträger weisen jedoch eine Anzahl gravierender Nachteile auf:
- Als Schaumstoff-Träger finden ausschließlich solche Einsatz, welche beim Wiederablösen der Klebebänder nicht reißen. Entsprechend reißfeste Träger benötigen jedoch einen z. T. sehr komplexen Mehrschichtaufbau, vgl. die Ansprüche 13, 14, 17 in **US 5,516,581** sowie Ansprüche 4, 15 in **WO 95/06691.**
- Einschichtige Schaumstoffträger sind nur begrenzt einsetzbar:
   - Einschichtige Schaumstoffträger entsprechend Anspruch 1 aus **WO 95/06691** haben eine Mindestdicke von wenigstens 30 mils = 760µm.
   - Einschichtige Schaumstoffträger nach Anspruch 1 in **WO 95/06691** sind weiterhin dadurch begrenzt, daß ausschließlich solche mit einem E-Modul (Young's modulus) von < ca 2400 psi = 16,9 MPa geeignet sind.
- Das Rückstellvermögen der in **US 5,516,581** beschriebenen Klebebänder liegt nach dem Wiederablöseprozeß sämtlichst bei < ca. 50%. Klebebänder mit merklich elastischem Rückstellverhalten lassen sich damit erfindungsgemäß nicht einsetzen. Entsprechendes gilt für die in **WO 95/06691** verwendeten Trägermaterialein (WO 95/06691; Seite 3 Zeilen 12, 13).

Der weitaus größte Teil der am Markt erhältlichen und etablierten Polymerschäume ist damit als Einsatzmaterial in vorgenannter Anwendung nicht geeignet.

Aufgabe der vorliegenden Erfindung war es, die vorgenannten Nachteile zu überwinden, insbesondere, durch Verstreckung im wesentlichen in der Verklebungsebene, wiederablösbare Selbstklebebänder zu realisieren, welche als Träger die breite Palette der im Markt vorhandenen Schaumstoffe zu nutzen vermögen. Allerdings würden solche Schaumstoffe bei der für den Ablöseprozeß nötigen hohen Reißdehnung beim Ablöseprozeß zerreißen. Es war also Sorge zu tragen, daß der rückstands- und zerstörungsfreie Ablöseprozeß hierdurch nicht eingeschränkt wird.

Erreicht wird dies durch Klebebänder, wie in den Ansprüchen näher gekennzeichnet, insbesondere solche mit
- Trägern enthaltend Polymerschäume, welche den sie enthaltenden Selbstklebebänder eine verbesserte Konformibilität (Anschmiegsamkeit) an rauhe Untergründen verleihen, wobei:
- entsprechende Träger beim Ablöseprozeß der Selbstklebebänder zerreißen, in Kombination mit:
- Haftklebemassen, welche durch ihre hohe Reißfestigkeit bei gleichzeitig hoher Dehnung ein rückstands- und zerstörungsfreies Wiederablösen der sie enthaltenden Selbstklebebänder durch Verstrecken insbesondere in der Verklebungsebene erlauben.

Durch die Möglichkeit, beim Ablöseprozeß zerreißende Schaumstoffträger für durch Verstrecken insbesondere in der Verklebungsebene rückstands- und zerstörungsfrei wiederablösbare Selbstklebebänder einsetzen zu können, steht eine sehr große Auswahl von Schäumen für diese Anwendung zur Verfügung. Selbstklebebänder mit breit gefächertem Anwendungsspekrum auf Basis preiswerter Rohstoffe lassen sich hierdurch realisieren.

Durch Art und Schichtstärke der verwendeten Haftklebemassen lassen sich die Ablösekräfte (Stripkräfte) erfindungsgemäßer Selbstklebebänder in weiten Bereichen steuern. Da die zum Entkleben durch Verstrecken benötigten Ablösekräfte durch die zur Verstreckung der Träger nötige Kraft wesentlich mitbeeinflußt wird, kann für erfindungsgemäße Selbstklebebänder gegenüber den in **US 5,516,581** und **WO 95/06691** beschriebenen, bei identischem Verstreckungsverhalten im Bereich unterhalb der Reißdehnung des verwendeten Schaumstoffträgers, davon ausgegangen werden, daß ihre Stripkräfte entsprechend niedriger liegen, was einen erheblichen Vorteil für den Anwender darstellt.

Die in **US 5,516,581** und **WO 95/06691** beschriebenen Schaumstoffträger müssen über ihre gesamte Lebenszeit die für den Ablöseprozeß durch Strippen nötige hohe Reißfestigkeit und Dehnfähigkeit besitzen. Tritt eine Reduzierung einer der vorgenannten Parameter durch Alterung ein, so ist der rückstandsfreie Ablöseprozeß gefährdet. Dieses gilt nicht für erfindungsgemäße Klebebänder, da hier der rückstandsfreie Wiederablöseprozeß durch das Eigenschaftsprofil der verwendeten Haftklebemassen bestimmt wird, nicht jedoch durch die mechanischen Eigenschaften der genutzten Trägerfolien.

Bei Verklebung auf rauhen und sehr empfindlichen Haftgründen, wie z. B. gestrichener Rauhfasertapete, zeigt sich, daß erfindungsgemäße Selbstklebebänder infolge der hohen Verklebungsfläche eine gleichmäßige Belastung der Verklebungsuntergründe ermöglichen. Hierdurch ergeben sich merklich geringere Zerstörungen der Haftgründe beim Wiederablösen, etwa in Form von Farbausrissen, und eine deutlich höhere Belastbarkeit.

### Beispielhafte Anwendungen

Rückstandsfrei und zerstörungsfrei wiederablösbare Selbstklebebänder für:
- Originalverschlußapplikationen, ein und beidseitig haftklebrig.
- die Fixierung von Postern, Bildern, Kalendern, Postkarten, Hinweisschilder, selbstklebenden Haken, auch vorkonfektioniert,
- Etiketten, z. B. Preisauszeichnungsetiketten,
- allgemein zum Verbinden von zu einem späteren Zeitpunkt wieder zu entklebender Materialien,
- Dämpfungselemente, Dämmelemente, Dichtungselemente.

### Selbstklebemassen

Als Selbstklebemassen finden solche auf Basis von Blockcopolymeren enthaltend Polymerblöcke gebildet von Vinylaromaten (A-Blöcke), bevorzugt Styrol, und solchen gebildet durch Polymerisation von 1,3-Dienen (D-Blöcke), bevorzugt Butadien und Isopren Anwendung. Sowohl Homo- als auch Copolymerblöcke sind erfindungsgemäß nutzbar. Resultierende Blockcopolymere können gleiche oder unterschiedliche D-Blöcke enthalten, die teilweise, selektiv oder vollständig hydriert sein können. Blockcopolymere können lineare A-D-A Struktur aufweisen. Einsetzbar sind ebenfalls Blockcopolymere von radialer Gestalt sowie sternförmige und lineare Multiblockcopolymere. Als weitere Komponenten können A-D Zweiblockcopolymere vorhanden sein. Blockcopolymere können modifiziert sein, z. B. funktionalisiert durch Umsetzung mit Maleinsäureanhydrid. Blockcopolymere von Vinylaromaten und Isobutylen sind ebenfalls erfindungsgemäß einsetzbar. Sämtliche der vorgenannten Polymere können alleine oder im Gemisch miteinander genutzt werden. Typische Einsatzkonzentrationen für die Styrolblockcopolymere liegen im Bereich zwischen 15Gew.% und 75Gew.%, bevorzugt im Bereich zwischen 30Gew.% und 60Gew.% besonders bevorzugt im Bereich zwischen 35Gew.% und 55Gew.%.

Als Klebrigmacher sind insbesondere geeignet: Kolophonium und seine Derivate, aliphatische, aromatenmodifizierte aliphatische, aromatische und phenolmodifizierte Klebharze um nur einige zu nennen. Einsatzkonzentrationen der Harze liegen typischerweise im Bereich zwischen 15Gew.% und 75Gew.%, bevorzugt im Bereich 30Gew.% und 65Gew.%, besonders bevorzugt im Bereich zwischen 35Gew.% und 60Gew.%. Bevorzugt eingesetzt werden im Falle der Verwendung von Kolophonium und dessen Derivate Ester von teil- oder vollhydriertem Kolophonium.

Als endblockverträgliche Harze (vornehmlich mit den Vinylaromatenblöcken verträgliche Harze) können Homo- und Copolymere von Vinylaromaten, wie z. B. Styrol oder α-Methylstyrol, Polyphenylenoxide, aber auch phenylenoxidmodifizierte Harze genutzt werden.

Weitere optimale Abmischkomponenten umfassen Weichmacheröle und Flüssigharze (Einsatzkonzentrationen zwischen 0 und max. ca 35Gew.%), Füllstoffe (verstärkende und nicht verstärkende), z. B. Siliziumdioxid, insbesondere synthetische Silica, Glas (gemahlen oder in Form von Kugeln), Aluminiumoxide, Zinkoxide, Calciumcarbonate, Titandioxide, Ruße, um nur einige zu nennen, Alterungsschutzmittel (primäre und sekundäre Antioxidantien, Lichtschutzmittel, Antiozonantien, Metalldesaktivatoren etc.). Abmischkomponenten umfassen ebenfalls Polymere, welche insbesondere Auswirkung auf die Ozonbeständigkeit der Blockcopolymere nehmen, wie z. B. Polyvinylacetate und Ethylen-Vinylacetat Copolymere.

Als weitere Polymere können natürliche und synthetische, wie z. B. Naturkautschuk, synthetische Polyisoprene, Polybutadiene, Polychloroprene, SBR, Kraton Liquid (Shell Chemicals),niedermolekulare Styrol-Dien-Blockcopolymere, wie z.B. Kreton LVSI 101, Polyisobutylene usw. vorhanden sein, welche die vinylaromatenhaltigen Blockcopolymere bis zu ca 50Gew.% ersetzen können.

Die erfindungsgemäß verwendeten Selbstklebemassen können chemisch, insbesondere strahlenchemisch (z. B. durch UV-Bestrahlung, γ-Bestrahlung oder durch Bestrahlung mittels schneller Elektronen) vernetzt sein.

Erfindungsgemäße Klebmassen sind optional solche, deren Haftklebrigkeit erst durch thermische Aktivierung erzeugt wird.

Geeignete Selbstklebemassen sind neben den zuvor beschriebenen auf Basis vinylaromatenhaltiger Blockcopolymere auch solche, welche über eine für den Ablöseprozeß ausreichende Reißfestigkeit und Kohäsion verfügen und gleichzeitig eine maximale Dehnung aufweisen, die höher als die Reißdehnung der eingesetzten Schaumstoffträger liegt. Entsprechende Haftklebemassen können allein oder in Kombination mit solchen auf Basis vinylaromatenhaltiger Blockcopolymere eingesetzt werden. Erfindungsgemäß geeignet sind z. B. haftklebrige Acrylatcopolymere copolymerisiert mit Makromonomeren, wobei die Makromonomere eine Glastemperatur von > +40°C aufweisen. Die hohe Reißfestigkeit entsprechender Copolymere wird wahrscheinlich durch die Assoziation der Makromonomere erreicht. Geeignete Makromonomere sind z. B. methacryloylterminierte Polymethylmethacrylate.

### Schaumstoffe

Erfindungsgemäße Schaumstoffe (Schaumstoffträger) sind Homo- und Copolymere des Ethylens, insbesondere Polyethylene niederer und sehr niederer Dichte (LDPE, LLDPE, VLDPE), Ethylen-Vinylacetat Copolymere, sowie Gemische vorgenannter Polymere. Weitere Polymere sind Polyvinylacetate, Polypropylene, EPDM, thermoplastische Elastomere auf Basis von Styrolblockcopolymeren, Polyurethane auf Basis aromatischer und aliphatischer Diisocyanate, PVC, Polychloroprene, Naturkautschuk, Acrylatcopolymere. Schaumstoffe können vernetzt oder unvernetzt zum Einsatz kommen.

Die Dicken der eingesetzten Schaumstoffe liegen insbesondere zwischen 175 µm und 30 mm, bevorzugt zwischen 250µm und 7 mm. Raumdichten betragen insbesondere 20 bis 500 kg/m², bevorzugt 30 bis 300 kg/m². Die Schaumstruktur kann geschlossenzellig, offenzellig oder gemischtzellig sein. Genutzt werden können verhautete oder nicht verhautete Schäume von integraler oder nicht integraler Struktur. Erfindungsgemäß einsetzbar sind ebenfalls Laminate mehrerer Schaumstoffe. Die Reißdehnung der eingesetzten Schäume ist kleiner als die Reißdehnung der die Reißfestigkeit bestimmenden Selbstklebemasse.

### Verankerung der Selbstklebemassen auf den Schäumen

Zur Erzeugung einer ausreichenden Verankerung der eingesetzten Haftklebemassen auf den Schaumstoffen werden diese vorteilhaft bei der Schaumherstellung und / oder vor der Beschichtung einer Druckvorbehandlung unterzogen. Geeignete Vorbehandlungsverfahren sind u. a. die Fluorvorbehandlung, die Coronavorbehandlung, die Plasmabehandlung und die Flammvorbehandlung, letztere insbesondere mittels elektrisch polarisierter Flamme. Vorbehandlungsmethoden können alleine oder in Kombination angewandt werden. Bei verhauteten Schäumen und bei Integralschäumen kann zur weiteren Verbesserung der Klebmasseverankerung eine Primerung des Schaumes durchgeführt werden.

Offenzellige und gemischtzellige Schäume können einer Imprägnierung unterzogen sein. Zwischen Schaumstoff und Haftklebemassen kann optional eine Sperrschicht integriert sein, um die Wanderung migrationsfähiger Materialien zwischen Haftklebemassen und Träger zu reduzieren.

### Klebebänder

Erfindungsgemäße Klebebänder enthalten wenigstens einen Schaumstoffträger, welcher einseitig oder beidseitig mit einer Selbstklebemasse ausgerüstet ist. Die Klebmasse verfügt über eine ausreichende Reißdehnung und Reißfestigkeit, so daß entsprechende Selbstklebebänder durch Verstrecken insbesondere in der Verklebungsebene rückstands und zerstörungsfrei von den Verklebungsuntergründen wiederabgelöst werden können. Selbstklebemassen können von gleicher oder unterschiedlicher Rezeptur sein, den Schaumstoff vollflächig oder teilweise, etwa im Streifenstrich, bedecken sowie mit gleichem oder unterschiedlichem Masseauftrag auf beide Klebebandseiten aufgetragen sein. Klebmassen können aus einer oder aus mehreren Klebmasseschichten aufgebaut sein. Z. B. kann eine Klebstoffschicht aus zwei Lagen bestehen, welche beide vinylaromatenhaltige Blockcopolymere nutzen, wobei die Blockcopolymere von unterschiedlicher Art sind. Auch kann auf eine erste Klebstoffschicht enthaltend vinylaromatenhaltige Blockcopolymere eine solche auf Basis von Naturkautschuk oder Polybutadien oder Polyisobutylen oder "Kraton Liquid" (Shell Chemicals) oder Gemische vorgenannter Polymere aufgebracht sein.

Erfindungsgemäß einsetzbar sind auch solche doppelseitig haftklebrigen Klebebänder, welche sich lediglich einseitig rückstandsfrei vom Untergrund wiederablösen lassen. Entsprechende Klebebänder sind dadurch gekennzeichnet, daß sie einseitig eine Haftklebemasse tragen, welche durch eine für den Ablöseprozeß ausreichend hohe Reißfestigkeit und Reißdehnung gekennzeichnet ist. Für die zweite Seite kann eine Haftklebmasse gewählt werden, welche keine für ein rückstandsfreies Wiederablösen ausreichende Reißfestigkeit und/oder Reißdehnung aufweist.

Die erfindungsgemäßen Klebebänder sind insbesondere dadurch gekennzeichnet, daß ihre Reißdehnungen größer als 200%, bevorzugt größer als 350%, besonders bevorzugt größer als 450% betragen. Die Reißdehnung des Klebebandes ist höher als die Reißdehnung des eingesetzten Schaumstoffträgers.

Die Reißfestigkeiten der verwendeten Haftklebemassen liegen insbesondere bei größer 1.5 MPa, bevorzugt bei größer 3 MPa, besonders bevorzugt bei größer 5 MPa.

Schichtstärken der die Reißfestigkeit bestimmenden Selbstklebemassen betragen insbesondere ≥ 100µm, bevorzugt ≥ 150µm, besonders bevorzugt ≥ 200µm.

Das Verhältnis von Reißkraft zu Stripkraft der Selbstklebernasse und damit auch das Selbstklebebänder ist bei Abzugswinkeln von < 10° gegen die Verklebungsfläche größer als 1,2 : 1, bevorzugt größer als 1,5 : 1, besonders bevorzugt größer als 2 : 1.

### Konfektionierform

Konfektionierformen erfindungsgemäßer Klebebänder umfassen sowohl Klebebandrollen als auch Klebebandstücke definierter Abmessungen, z. B. in Form von Stanzlingen. Klebebandstücke definierter Abmessungen können wahlweise entsprechend **DE 4.428.587** ein ausgeformtes Ende, - etwa ein spitz zulaufendes Ende - aufweisen, oder entsprechend **DE 4.431.914** mit trennlackierter Anfasserfolie oder trenlackiertem Trennpapier ausgerüstet sein.

### Herstellung

Erfindungsgemäße Klebebänder lassen sich durch Lösemittelbeschichtung, Kalt- oder Heißlaminierung und durch Schmelzbeschichtung der zu verwendenden Schaumstoffe herstellen. Für Schichtstärken > ca 75µm ist die Laminierung bzw. die Schmelzbeschichtung aus ökonomischen Gründen vorzuziehen.

### Prüfmethoden

### Höchstzugkraft, Reißdehnung

Die Messungen erfolgen in Anlehnung an DIN 53504 mit Normprüfkörpern der Größe S 2 bei einer Separationsgeschwindigkeit von 300mm/min.

### Elastizitätsmodul

Die Bestimmung des Elastizitätsmoduls erfolgt analog ASTM D 882 mit nachfolgenden Prüfkörperdimensionen: Prüfstreifenlänge = 140mm; Einspannlänge (Distanz zwischen Klemmbacken) = 100mm; Prüfstreifenbreite = 15mm. Separationsgeschwindigkeit = 25,4 mm/min.

### Kippscherfestigkeit

Zur Bestimmung der Kippscherfestigkeit wird die zu prüfende Klebstoff-Folie der Abmessung 20mm * 50mm, welche an einem Ende beidseitig mit einem nicht haftklebrigen Anfasserbereich versehen ist (erhalten durch Aufkaschieren von 25µm starker biaxial verstreckter Polyesterfolie der Abmessungen 20 mm * 13 mm (Hostaphan RN 25)), mittig auf eine hochglanzpolierte quadratische Stahlplatte der Abmessung 40mm * 40mm *3mm (Länge * Breite * Dicke) verklebt. Die Stahlplatte ist rückseitig mittig mit einem 10cm langen Stahlstift versehen, welcher vertikal auf der Plattenfläche sitzt. Die erhaltenen Probekörper werden mit einer Kraft von 100N auf den zu prüfenden Haftgrund verklebt (Andruckzeit = 5sec) und 5 min im unbelasteten Zustand belassen. Nach Beaufschlagung der gewählten Kippscherbelastung durch Anhängen eines Gewichtes (Hebelarm und Masse des Gewichtes wählbar) wird die Zeit bis zum Versagen der Verklebung ermittelt.

### Ablösekraft (Stripkraft)

Zur Ermittlung der Ablösekraft (Stripkraft) wird eine Klebstoff-Folie der Abmessungen 50mm * 20mm (Länge * Breite), mit am oberen Ende nicht haftklebrigem Anfasserbereich (s. o.), zwischen zwei Stahlplatten (deckungsgenau zueinander angeordnet) der Abmessungen 50mm x 30mm, entsprechend dem unter "Kippscherfestigkeit" beschriebenen Vorgehen, jedoch mit Anpreßdrucken von jeweils 500 N, verklebt. Die Stahlplatten tragen an ihrem unteren Ende je eine Bohrung zur Aufnahme eines S-förmigen Stahlhakens. Das untere Ende des Stahlhakens trägt eine weitere Stahlplatte, über welche die Prüfanordnung zur Messung in der unteren Klemmbacke einer Zugprüfmaschine fixiert werden kann. Die Verklebungen werden 24h bei +40°C gelagert. Nach Rekonditionierung auf RT wird der Klebfolienstreifen mit einer Zuggeschwindigkeit von 1000mm/min parallel zur Verklebungsebene herausgelöst. Dabei wird die erforderliche Ablösekraft (Stripkraft) in N/cm gemessen. Die Stahlplatten werden abschließend auf vorhandene Klebmasserückstände überprüft.

### Verklebungsfläche auf Glas

Klebfolienstreifen der Abmessungen 20 mm x 50 mm werden mittig auf einen planaren Stahluntergrund der Abmessungen 200 mm x 100 mm verklebt. Der so hergestellte Verbund wird vertikal, deckungsgleich auf eine Glasplatte gleicher Abmessung verklebt und mit 100 N gleichmäßig mittig angedrückt. Die Andruckzeit beträgt 5 sec. Es erfolgt eine Dreifachbestimmung. Die erhaltene Verklebungsfläche auf der Glasoberfläche wird visuell ermittelt und in Prozent der Klebstoff-Folienoberfläche angegeben.

### Verklebungsfläche auf Rauhfasertapete

Zur Ermittlung der Verklebungsfläche auf rauhen Untergründen werden Klebfolienstreifen der Abmessungen 20 mm x 50 mm mittig auf einen planaren Stahluntergrund der Abmessungen 200 mm x 100 mm verklebt. Der so hergestellte Verbund wird vertikal, deckungsgleich auf eine gestrichene Rauhfasertapete (Tapete: Erfurt Körnung 52; Farbe: Herbol Zenit LG; Tapete verklebt auf Preßspanplatte) gleicher Abmessung, die dünn mit Alubronce bepudert wurde, aufgelegt und mit 100 N gleichmäßig mittig angedrückt. Die Andruckzeit beträgt 5 sec. Es erfolgt eine Dreifachbestimmung. Muster lassen sich leicht vertikal von der bepuderten Rauhfasertapete abheben. Die erhaltene Verklebungsfläche wird visuell über die auf die Klebfolienoberfläche übertragenen Alubronze ermittelt und in Prozent der Klebstoff-Folienoberfläche angegeben.

### Prüfung auf rückstandsfreies und zerstörungsfreies Wiederablösen

Eine entsprechende Prüfung wird im Rahmen der Bestimmung der Ablösekraft (Stripkraft) (s. o.) für die Untergründe Stahl // Stahl durchgeführt. Zur Prüfung der rückstandsfreien und zerstörungsfreien Wiederablösbarkeit auch auf anderen Untergründen, z. B. PMMA // gestrichene Rauhfasertapete (Tapete: Erfurt Körnung 52; Farbe: Herbol Zenit LG; Tapete verklebt auf Preßspanplatte), werden entsprechende Prüfkörper, wie oben unter "Ablösekraft (Stripkraft)" beschrieben, erstellt und die Verklebung entweder maschinell oder manuell gelöst (gestrippt). Bewertet wird, ob Klebmasserückstände auf den Verklebungsuntergründen vorhanden sind respektive ob Zerstörungen der Verklebungsuntergründe detektiert werden können.

### Beispiel 1

Auf unten gelistete Schaumstoffe wird beidseitig eine Haftklebemasse bestehend aus 20 Tln. SBS Blockcopolymer (Vector 8508, Exxon), 80 Tln. SIS Blockcopolymer (Vector 4211, Exxon), 100 Tln. eines Pentaesters von teilhydriertem Kolophonium (Foralyn 110, Hercules) und 1 Tl. eines primären Antioxidantes (Irganox 1010, Ciba Geigy) [= Rezeptur 1] durch Kaltlamination aufgebracht. Hierzu wird der gewählte Schaumstoff auf den auf silikonisiertem Trennpapier vorliegenden Haftklebstoff aufgelegt, danach mit einer gummibeschichteten Stahlwalze von 25 cm Breite bei einem Anpreßdruck von 50 N fünf mal überrollt. Das so erhaltene Zwischenprodukt wird in identischer Weise auf der zweiten Seite mit Haftklebstoff beschichtet. Prüfungen werden nach 24-stündiger Konditionierung der so erhaltenen Muster im Klimaraum (50 % rel. Feuchte, T = RT = 23°C) durchgeführt. Prüfkörper (Klebstoff-Folien) sind in allen Fällen quer zur Fertigungsrichtung des verwendeten Schaumstoffträgers herausgestanzt. Es ergeben sich nachfolgende Eigenschaften:

| **Musterbezeichnung** | **Schaumstoff Handelsname** | **Schaumstoff Art** | **Hersteller** |
|---|---|---|---|
| 3.003 | PUR/Ester B45 | Polyurethanester | Otto Bock Kunststoff KG |
| 3.004 | RA 24 | EPDM | Rubber Astic & Co. Ltd. |
| 3.005 | W-Schaum 0.12/4,5/150 | PVC-w | Freudenberg |

| **Musterbezeichnung** | **Schaumdicke in µm** | **Raumgewicht in kg/m**^{**2**} | **Klebmasseauftrag Seiten A // B** | **Klebmasse- rezeptur** |
|---|---|---|---|---|
| 3.003 | 6000 | 45 | 190 // 200 g/m² | [1] |
| 3.004 | 4000 | 60 | 200 // 200 g/m² | [1] |
| 3.005 | 4600 | 120 | 200 // 200 g/m² | [1] |

| **Musterbezeichnung** | **Höchstzugkraft** | **Reißdehnung** | **Stripkraft** | **Schaum zerreißt beim Ablösen ?** | **Klebstoff-Folie rückstands- und zerstörungsfrei stripbar*** |
|---|---|---|---|---|---|
| | **------Klebstoff-Folie--------** | | | | |
| 3.003 | 53 N/cm | 1150 % | 16 N/cm | ja | ja |
| 3.004 | 46 N/cm | 1200 % | 8,3 N/cm | ja | ja |
| 3.005 | 47 N/cm | 1200 % | 13 N/cm | ja | ja |

| | | | | | |
|---|---|---|---|---|---|
| * Verklebungsuntergründe = Stahl // Stahl und gestrichene Rauhfaser // PMMA | | | | | |

Sämtliche Muster lassen sich vollständig rückstands- und zerstörungsfrei aus den Klebfugen Stahl // Stahl und gestrichene Rauhfaser // PMMA herauslösen. In allen Fällen zerreißt hierbei der eingesetzte Schaumstoff, jedoch nicht die verwendeten Haftklebemassen.

### Beispiel 2

Nachfolgend gelistete Schaumstoffe auf Basis Polyethylen resp. eines Ethylen-Vinylacetat Mischpolymers werden entsprechend Beispiel 1 einseitig oder beidseitig mit Haftklebemasse der Rezeptur [1] beschichtet. Es ergeben sich nachfolgende Eigenschaften:

| **Musterbezeichnung** | **Schaumstoff Handelsname** | **Schaumstoff Art** | **Hersteller** |
|---|---|---|---|
| 3.012C | Alveolit TA 0400.51 | PE vernetzt | Alveo AG |
| 3.013 | Alveolit TA 0500.5 | PE vernetzt | Alveo AG |
| 3.013e | Alveolit TA 0500.5 | PE vernetzt | Alveo AG |
| 3.015 | Alveolit TA 1000.8 | PE vernetzt | Alveo AG |
| 3.018 | Alveolit TE 1000.8 | EVAc vernetzt | Alveo AG |
| 3.016 | Alveolit TA 1001.6 | PE vernetzt | Alveo AG |
| 3.002 | Alveolit TA 3003 | PE vernetzt | Alveo AG |

| **Musterbezeichnung** | **Schaumdicke in µm** | **Raumgewicht in kg/m** ^{**2**} | **Klebmasseauftrag Seiten A // B** | **Klebmasserezeptur** |
|---|---|---|---|---|
| 3.012C | 510 | 250 | 200 // 200 g/m ² | [1] |
| 3.013 | 500 | 200 | 190 // 200 g/m ² | [1] |
| 3.013e | 500 | 200 | 200 g/m ² | [1] |
| 3.015 | 800 | 100 | 200 // 200 g/m ² | [1] |
| 3.018 | 800 | 100 | 200 // 200 g/m ² | [1] |
| 3.016 | 1600 | 100 | 200 // 200 g/m ² | [1] |
| 3.002 | 3000 | 33 | 200 // 200 g/m ² | [1] |

| **Musterbezeichnung** | **Höchstzugkraft** | **Reißdehnung** | **Stripkraft** | **Schaum zerreißt beim Ablösen ?** | **Klebstoff-Folie rückstands- und zerstörungsfrei stripbar*** |
|---|---|---|---|---|---|
| | **------Klebstoff-Folie---------** | | | | |
| 3.012C | 42 N/cm | 1100 % | 15,0 N/cm | ja | ja |
| 3.013 | 46 N/cm | 1100 % | 14,5 N/cm | ja | ja |
| 3.013e | n. e.** | n. e.** | n. e.** | ja | ja*** |
| 3.015 | 61 N/cm | 1200 % | 11,7 N/cm | ja | ja |
| 3.018 | 49 N/cm | 1150 % | 12,5 N/cm | ja | ja |
| 3.016 | 57 N/cm | 1200 % | 17 N/cm | ja | ja |
| 3.002 | 50 N/cm | 1100 % | 9 N/cm | ja | ja |

| | | | | | |
|---|---|---|---|---|---|
| * Verklebungsuntergründe = Stahl // Stahl und gestrichene Rauhfaser // PMMA | | | | | |
| ** n. e. = nicht ermittelt | | | | | |
| *** Verklebungsuntergründe = Stahl, PMMA, gestrichene Rauhfaser; manuell im Winkel von kleiner ca 10° von vorgenannten Untergründen mit einer Separationsgeschwindigkeit von ca 3000 mm/min abgestrippt | | | | | |

Sämtliche Muster lassen sich vollständig, rückstands- und zerstörungsfrei aus den Klebfugen Stahl // Stahl und gestrichene Rauhfaser // PMMA herauslösen bzw. im Falle des Musters 3.013e einseitig von den o. g. Verklebungsuntergründen vollständig, rückstands- und zerstörungsfrei wiederablösen. In allen Fällen zerreißt hierbei der eingesetzte Schaumstoff, jedoch nicht die verwendete Haftklebemasse. Im Falle der Muster 3.012C, 3.013, 3.013e, 3.015 und 3.018 bleibt der Verbund aus Schaumstoffträger und Haftklebemasse während des Ablöseprozesses erhalten. Gleiches gilt nicht für die Muster 3.002 und 3.016. Für letztere Materialien wird während des Ablöseprozesses eine Trennung von Haftklebemasse und Schaumstoffträger bzw. eine Delamination der Schaumstoffträgeroberfläche beobachtet. Der vollständige, rückstands- und zerstörungsfreie Wiederablöseprozeß wird hierdurch jedoch nicht beeinträchtigt.

### Beispiel 3

Ein 510µm dicker vernetzter Polyethylenschaumstoff vom Raumgewicht 200 kg/m³ (Alveolit TA 0400.51; Fa. Alveo) wird entsprechend Beispiel 1 beidseitig mit Haftklebemasse bestehend aus 60 Tln. Vector 4211, 40 Tln. Vector 4261, 100 Tln. Pentalyn H-E (Hercules) und 1 Tl. Irganox 1010 in unterschiedlichen Masseaufträgen beschichtet (Rezeptur [2]). Es ergeben sich nachfolgende Eigenschaften:

| **Musterbezeichnung** | **Klebmasseauftrag Seiten A // B** | **Klebmasserezeptur** |
|---|---|---|
| 3.012 | 50 // 60 g/m² | [2] |
| 3.012A | 100 // 105 g/m² | [2] |
| 3.012B | 150 // 150 g/m² | [2] |
| 3.012C-2 | 205 // 200 g/m² | [2] |
| 3.002D | 305 // 310 g/m² | [2] |

| **Musterbezeichnung** | **Höchstzugkraft** | **Reißdehnung** | **Stripkraft** | **Schaum zerreißt beim Ablösen ?** | **Klebstoff-Folie rückstands- und zerstörungsfrei stripbar*** |
|---|---|---|---|---|---|
| 3.012 | 12 N/cm | 1100 % | - | ja | nein |
| 3.012A | 28 N/cm | 1200 % | 13,5 N/cm | ja | ja |
| 3.012B | 42 N/cm | 1200 % | 14,5 N/cm | ja | ja |
| 3.012C-2 | 44 N/cm | 1150 % | 15,5 N/cm | ja | ja |
| 3.002D | 64 N/cm | 1200 % | 17,5 N/cm | ja | ja |

| | | | | | |
|---|---|---|---|---|---|
| * Verklebungsuntergründe = Stahl // Stahl und gestrichene Rauhfaser // PMMA | | | | | |

Erst bei einem Klebmasseauftrag von beidseitig ca 100g/m² übersteigt die Höchstzugkraft der o. g. Klebstoff-Folien deren Stripkraft, so daß sie vollständig, rückstands- und zerstörungsfrei aus den verwendeten Klebfugen herausgelöst werden können. Der verwendete Schaumstoffträger zerreißt in allen Fällen und weist allein keine ausreichende Festigkeit für ein zerstörungs- und rückstandsfreies Wiederablösen auf.

### Beispiel 4

Nachfolgend gelistete Schaumstoffe auf Basis von Polyethylen bzw. eines Ethylen-Vinylacetat Mischpolymers werden entsprechend Beispiel 1 beidseitig mit Haftklebemasse der Rezeptur [1] (Siehe Bspl. 1) beschichtet. Es erfolgt eine Prüfung auf Verklebungsfestigkeit. Nachfolgende Daten werden im Vergleich zu doppelseitigen Selbstklebebändern, welche keinen Schaumstoffzwischenträger beinhalten, bestimmt.

| **Musterbezeichnung** | **Schaumstoff Handelsname** | **Schaumstoff Art** | **Hersteller** |
|---|---|---|---|
| 3.017 | Alveolit TA 0500.8 | PE vernetzt | Alveo AG |
| 3.018 | Alveolit TE 1000.8 | EVAc vernetzt | Alveo AG |
| 3.000A | - | - | - |
| 3.000B | - | - | - |

| **Musterbezeichnung** | **Schaumdicke in µm** | **Raumgewicht in kg/m**^{**3**} | **Klebmasseauftrag Seiten A // B** | **Klebmasserezeptur** |
|---|---|---|---|---|
| 3.017 | 800 | 200 | 200 // 200 g/m² | [1] |
| 3.018 | 800 | 100 | 200 // 200 g/m² | [1] |
| 3.000A | - | - | 360 g/m² | [1] |
| 3.000B | - | - | 650 g/m² | [1] |

| **Musterbezeichnung** | **Verklebungsfläche in % auf Rauhfaser // auf Glas** | |
|---|---|---|
| 3.017 | ca 80 % | > 95 % |
| 3.018 | > 95 % | ca 90 % |
| 3.000A | ca 30 % | 40-50 %**** |
| 3.000B | ca 40 % | 60-70 %**** |

| | | |
|---|---|---|
| **** großflächige Lufteinschlüsse | | |

| **Musterbezeichnung** | **Kippscherfestigkeit***** | **Schaumstoff zerreißt beim Ablösen ?** | **Klebstoff-Folie rückstands- und zerstörungsfrei stripbar*** |
|---|---|---|---|
| 3.017 | > 25 Tage | ja | ja |
| 3.018 | > 25 Tage | ja | ja |
| 3.000A | 4 - 6 Tage | - | ja |
| 3.000B | 8 - 12 Tage** | - | ja |

| | | | |
|---|---|---|---|
| * Verklebungsuntergründe = Stahl // Stahl und gestrichene Rauhfaser // PMMA | | | |
| ** Rauhfasertapete spaltet im verklebten Bereich | | | |
| *** Hebelarm = 50 mm; Scherlast = 5 N | | | |

Klebstoff-Folien mit Schaumstoffzwischenträger, welche eine Klebmasseschichtstärke nutzen, die etwa der Summe der Schichtstärken der Klebmasseschichten von erfindungsgemäßen schaumstoffzwischenträgerhaltigen Klebstoff-Folien entsprechen, weisen auf rauhen Untergründen deutlich höhere Verklebungsflächen und höhere Kippscherfestigkeiten auf. Durch die erreichte höhere Verklebungsfläche wird zusätzlich eine Delamination wenig fester Untergründe, wie im vorliegenden Fall der gestrichenen Raufasertapete, effektiv unterdrückt. Auf glatten Untergründen wird die Tendenz zum Einschluß von Luftblasen in die Verklebungsfläche merklich vermindert.

### Beispiel 5

Nachfolgende Polyethylenschaumstoffe werden entsprechend Beispiel 1 beidseitig mit Haftklebemasse entsprechend Rezeptur 1 bzw. einer Haftklebemasse bestehend aus 50 Tln. Naturkautschuk vom K-Wert 145, 50 Tln. Foralyn 110 und 1 Tl. Irganox 1010 [Rezeptur 3] in unterschiedlichen Masseaufträgen beschichtet. Es ergeben sich nachfolgende Eigenschaften:

| **Musterbezeichnung** | **Schaumstoff Handelsname** | **Schaumstoff Art** | **Hersteller** |
|---|---|---|---|
| 3.012C | Alveolit TA 0400.51 | PE vernetzt | Alveo AG |
| 3.023 | Alveolit TA 0400.51 | PE vernetzt | Alveo AG |
| 3.014 | Alveolit TA 0501.5 | PE vernetzt | Alveo AG |
| 3.024 | Alveolit TA 0501.5 | PE vernetzt | Alveo AG |
| 3.023A | Alveolit TA 0400.51 | PE vernetzt | Alveo AG |
| 5.002 | Alveolit TA 0400.51 | PE vernetzt | Alveo AG |

| **Musterbezeichnung** | **Schaumdicke in µm** | **Raumgewicht in kg/m**^{**2**} | **Klebmasseauftrag Seiten A // B** | **Klebmasserezeptur** |
|---|---|---|---|---|
| 3.012C | 510 | 250 | 200 // 200 g/m² | [1] |
| 3.023 | 510 | 250 | 200 // 45 g/m² | [1]//[3] |
| 3.014 | 1500 | 200 | 200 // 200 g/m² | [1] |
| 3.024 | 1500 | 200 | 650 // 45 g/m² | [1]//[3] |
| 3.023A | 510 | 250 | 650 // 45 g/m² | [1]//[3] |
| 5.002 | 510 | 250 | 45//200//200//45 | [3]//[1]//[1]//[3] |

| **Musterbezeichnung** | **Schaumstoff zerreißt beimAblösen?** | **Klebstoff-Folie rückstands- und zerstörungsfrei stripbar*** |
|---|---|---|
| 3.012C | ja | ja |
| 3.023 | ja | ja |
| 3.014 | ja | ja |
| 3.024 | ja | einseitig** |
| 3.023A | ja | ja |
| 5.002 | ja | ja |

| | | |
|---|---|---|
| * Verklebungsuntergründe = Stahl // Stahl und gestrichene Rauhfaser // PMMA | | |
| ** Klebverbindung läßt sich zerstörungsfrei lösen; es verbleibt NK-basierende Haftklebemasse auf einem Verklebungsuntergrund; die styrolblockcopolymerbasierende Haftklebemasse löst sich rückstandsfrei vom Untergrund | | |

Klebstoff-Folien, welche beidseitig mit Haftklebemassen von hoher Reißfestigkeit und hoher Dehnung beschichtet sind, lassen sich vollständig, rückstands- und zerstörungsfrei wiederablösen. O. g. Muster, bei denen während des Ablöseprozesses kein Delaminieren des Schaumstoffträgers bzw. kein Ablösen der Haftklebemasse vom Schaumstoffträger auftritt, läßt sich auch dann beidseitig rückstands- und zerstörungsfrei wiederablösen, wenn die für die zweite Klebstoff-Folienseite genutzte Haftklebemasse eine ausreichend hohe Reißfestigkeit und -dehnung besitzt (Muster 3.023 und 3.023A). Entsprechendes gilt in vorliegenden Fällen nicht für solche der beschriebenen Klebstoff-Folien, bei welchen während des Ablöseprozesses ein Delaminieren des Schaumstoffträgers oder ein Ablösen des wenig reißfesten Haftklebers vom Schaumstoffträger auftritt. Jedoch sind auch diese Klebstoff-Folien zerstörungsfrei aus der Klebfuge herauszulösen.

## Patentansprüche

1. Klebeband für eine durch Zug rückstandsfrei und beschädigungslos wiederlösbare Verklebung, mit einem Schaumstoffträger, der einseitig oder beidseitig mit einer Selbstklebemasse beschichtet ist, **dadurch gekennzeichnet, daß**
a) auf mindestens einer der beiden Seiten des Schaumstoffträgers eine Selbstklebemasse aufgebracht ist, deren Verhältnis von Höchstzugkraft zu Stripkraft (Abzugskraft) gemäß DIN 53 504 bei einem Abzugswinkel von weniger als 10° zur Verklebungsfläche größer als 1,2: 1 ist, wobei die Selbstklebemasse eine solche auf Basis von Blockcopolymeren enthaltend Polymerblöcke aus Vinylaromaten (A-Blöcke) und solchen gebildet durch Polymerisation von 1,3-Dienen (D-Blöcke) ist, und/oder eine solche auf Basis haftklebriger Acrylatcopolymere copolymerisiert mit Makromonomeren ist, wobei die Makromonomeren eine Glastemperatur von über + 40° C aufweisen,
b) die Reißdehnung des Klebebandes höher als die Reißdehnung des Schaumstoffträgers ist, und die Reißdehnung des Schaumstoffträgers kleiner als die Reißdehnung der die Reißfestigkeit des Klebebandes bestimmenden Selbstklebemasse ist,
c) der Schaumstoffträger beim Wiederlösen der Verklebung durch Zug (Strippen) zerreißt, wobei der Schaumstoffträger aus Homo- oder Copolymeren des Ethylens, Polyvinylacetat, Polypropylen, EPDM, thermoplastischen Elastomeren auf Basis von Styrolblockcopolymeren, Polyurethan auf Basis aromatischer und aliphatischer Diisocyanate, PVC, Polychloropren, Naturkautschuk oder Acrylatcopolymer besteht.

2. Klebeband nach Anspruch 1, **dadurch gekennzeichnet, daß** der Schaumstoffträger beidseitig mit Selbstklebemasse beschichtet ist.

3. Klebeband nach Anspruch 1, **dadurch gekennzeichnet, daß** die Selbstklebemasse Klebrigmacher und gegebenenfalls weitere Abmischkomponenten und/oder Zusätze enthält.

4. Klebeband nach Anspruch 1, **dadurch gekennzeichnet, daß** die Selbstklebemasse und/oder der Schaumstoffträger aus jeweils mindestens zwei Schichten besteht.

5. Klebeband nach Anspruch 1, **dadurch gekennzeichnet, daß** es in Form von Abschnitten vorliegt, wobei das eine Ende des Abschnitts einen nicht-klebenden Anfasser aufweist und das andere Ende ggf. eine zum Ende hin abnehmende Klebfläche aufweist.

6. Klebeband nach Anspruch 5, **dadurch gekennzeichnet, daß** der Anfasser durch aufkaschierte Folienabschnitte gebildet wird, deren mit der Selbstklebemasse sich berührende Seiten anti-adhäsiv ausgerüstet sind.

7. Verwendung eines Abschnitts eines Klebebandes nach einem der Ansprüche 1 - 6 für eine rückstandsfreie und beschädigungslos wiederlösbare Verklebung, **dadurch gekennzeichnet, daß** man an einem Ende des Abschnitts zieht.

8. Verwendung nach Anspruch 7, **dadurch gekennzeichnet, daß** man den beidseits mit Selbstklebemasse beschichteten Abschnitt zusammen mit einem Haken, einer Basisplatte oder einem aufzuhängenden Gegenstand ggf. auf diesen vorkonfektioniert verwendet.

## Claims

1. Adhesive tape for a bond which can be redetached by pulling without residue and without damage, having a foam backing coated on one or both sides with a self-adhesive composition, **characterized in that**
a) on at least one of the two sides of the foam backing there is applied a self-adhesive composition whose ratio of maximum tensile strength to stripping force (peel force) according to DIN 53 504 at a peel angle of less than 10° to the bond surface is greater than 1.2:1, the self-adhesive composition being based on block copolymers comprising polymer blocks of vinylaromatic compounds (A blocks) and those formed by polymerization of 1,3-dienes (D blocks), and/or based on adhesive acrylate copolymers copolymerized with macromonomers, the macromonomers having a glass transition temperature of more than +40°C,
b) the elongation at break of the adhesive tape is greater than the elongation at break of the foam backing, and the elongation at break of the foam backing is less than the elongation at break of the self-adhesive composition which determines the tensile strength of the adhesive tape,
c) the foam backing tears during the redetachment of the bond by pulling (stripping), the foam backing comprising homo- or copolymers of ethylene, polyvinyl acetate, polypropylene, EPDM, thermoplastic elastomers based on styrene block copolymers, polyurethane based on aromatic and aliphatic diisoyanates, PVC, polychloroprene, natural rubber or acrylate copolymer.

2. Adhesive tape according to Claim 1, **characterized in that** the foam backing is coated on both sides with self-adhesive composition.

3. Adhesive tape according to Claim 1, **characterized in that** the self-adhesive composition comprises tackifiers and, if desired, comprises further blend components and/or additives.

4. Adhesive tape according to Claim 1, **characterized in that** the self-adhesive composition and/or the foam backing consist in each case of at least two layers.

5. Adhesive tape according to Claim 1, **characterized in that** it is in the form of sections, where one end of the section has a non-tacky grip tab and the other end, if desired, has an adhesive area which decreases towards the end.

6. Adhesive tape according to Claim 5, **characterized in that** the grip tab is formed by laminated-on film sections whose sides in contact with the self-adhesive composition have been given an anti-adhesive finish.

7. Use of a section of an adhesive tape according to one of Claims 1-6 for a bond which can be redetached without residue and without damage, **characterized in that** one end of the section is pulled.

8. Use according to Claim 7, **characterized in that** the section coated on both sides with self-adhesive composition is used together with a hook, a base plate or an article which is to be suspended and, if desired, is preassembled on such articles.

## Revendications

1. Bande adhésive pour un collage redétachable par traction sans résidus et sans endommagement, présentant un support en mousse qui est revêtu d'un côté ou des deux côtés par une masse auto-adhésive, **caractérisée en ce que**
a) on a appliqué sur au moins un des deux côtés du support en mousse une masse auto-adhésive dont le rapport force de traction maximale à force de pelage (force de tirage selon la norme DIN 53504), à un angle de tirage inférieur à 10° par rapport à la surface de collage, est supérieur à 1,2:1, la masse autoadhésive étant une masse à base de copolymères à blocs contenant des blocs de polymères d'aromates de vinyle (blocs A) et des blocs formés par polymérisation de 1,3-diènes (blocs D) et/ou de copolymères d'acrylate adhésifs copolymérisés avec des macromonomères, les macromonomères présentant une température de transition vitreuse supérieure à +40°C,
b) l'allongement à la déchirure de la bande adhésive est supérieur à l'allongement à la déchirure du support en mousse et **en ce que** l'allongement à la déchirure du support en mousse est inférieur à l'allongement à la déchirure de la masse adhésive déterminant la résistance à la déchirure de la bande adhésive,
c) le support en mousse se déchire lors du redétachement du collage par traction (pelage), le support en mousse étant constitué d'homopolymères ou de copolymères de l'éthylène, de poly(acétate de vinyle), de polypropylène, d'EPDM, d'élastomères thermoplastiques à base de copolymères à blocs de styrène, de polyuréthane à base de diisocyanates aromatiques et aliphatiques, de PVC, de polychloroprène, de caoutchouc naturel ou de copolymère d'acrylate.

2. Bande adhésive selon la revendication 1, **caractérisée en ce que** le support en mousse est revêtu des deux côtés par une masse auto-adhésive.

3. Bande adhésive selon la revendication 1, **caractérisée en ce que** la masse auto-adhésive contient des agents rendant adhésifs et, le cas échéant, d'autres composants de mélange et/ou additifs.

4. Bande adhésive selon la revendication 1, **caractérisée en ce que** la masse auto-adhésive et/ou le support en mouse est à chaque fois constitué d'au moins deux couches.

5. Bande adhésive selon la revendication 1, **caractérisée en ce qu'**elle se trouve sous forme de segments, une extrémité du segment présentant une prise non-collante et l'autre extrémité présentant le cas échéant une surface collante qui se rétrécit vers l'extrémité.

6. Bande adhésive selon la revendication 5, **caractérisée en ce que** la prise est formée par des segments de film collés dont les côtés en contact avec la masse auto-adhésive sont pourvus d'un anti-adhésif.

7. Utilisation d'un segment d'une bande adhésive selon l'une quelconque des revendications 1 à 6 pour un collage redétachable sans résidus et sans endommagement, **caractérisée en ce qu'**on tire sur une extrémité du segment.

8. Utilisation selon la revendication 7, **caractérisée en ce qu'**on utilise le morceau revêtu des deux côtés d'une masse auto-adhésive conjointement avec un crochet, une plaque de base ou un objet à suspendre le cas échéant préconfectionné sur celui-ci.
